# FASCICULE DE BREVET EUROPEEN

(11) **EP 2 563 666 B1**
(45) Date de publication et mention de la délivrance du brevet: **02.07.2014**
(21) Numéro de dépôt: 11713000.5
(22) Date de dépôt: 14.03.2011
(51) Int. Cl.: B64D 29/06

(54) **NACELLE POUR MOTEUR D'AERONEF**
GONDEL FÜR EIN FLUGZEUGTRIEBWERK
NACELLE FOR AN AIRCRAFT ENGINE

(30) Priorité: 29.04.2010 FR 1053343
(43) Date de publication de la demande: 06.03.2013
(73) Titulaire: Aircelle, 76700 Gonfreville L'Orcher (FR)
(72) Inventeur: BELLANGER, Alexandre, F-76600 Le Havre (FR); BOUILLON, Florent, F-76280 Anglesqueville L'esneval (FR); DUBOIS, Laurent, F-76620 Le Havre (FR); ANFRAY, Emmanuel, F-76290 Saint Martin du Manoir (FR)
(74) Mandataire: Gaillarde, Frédéric F. Ch.
(86) Numéro de dépôt international: PCT/FR2011/050506
(87) Numéro de publication internationale: WO 2011/135214

(56) Documents cités:
- FR-A1- 2 920 133
- FR-A1- 2 920 140
- US-A- 5 239 822

## Description

La présente invention se rapporte au domaine des nacelles pour moteurs d'aéronef.

Une nacelle pour moteur d'aéronef est connue de US 5239822, qui montre les caractéristiques du préambule de la revendication 1.

Comme cela est connu en soi, un moteur d'aéronef, qui est en général du type turboréacteur, est placé à l'intérieur d'une nacelle qui, entre autres fonctions :
- assure le carénage aérodynamique du moteur,
- permet de canaliser l'air extérieur vers le moteur,
- permet de relier le moteur à l'aéronef.

Classiquement, la liaison du moteur à l'aéronef est effectuée au moyen d'une structure de support comprenant deux poutres longitudinales supérieures, souvent appelées poutres 12 heures en raison de leur position au sommet de la nacelle, deux poutres longitudinales inférieures, classiquement appelées poutres 6 heures en raison de leur position dans la partie inférieure de la nacelle, et un ensemble présentant une forme sensiblement annulaire appelé cadre avant, formé en réalité de deux demi-cadres s'étendant chacun entre lesdites poutres longitudinales supérieures et inférieures, et destiné à être fixé à la périphérie du bord aval du carter de la soufflante du moteur.

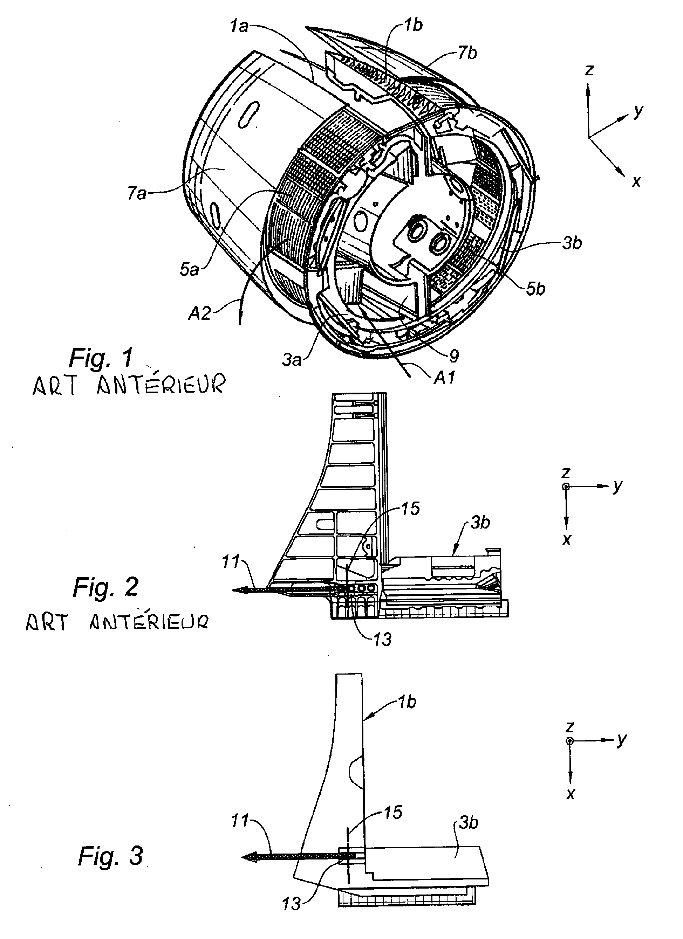

Une telle configuration classique est visible sur la figure 1 ci-annexée, où l'on a représenté une partie arrière de nacelle incorporant en l'espèce un inverseur de poussée, cette partie arrière comprenant :
- deux poutres 12 heures 1 a, 1 b,
- deux demi-cadres avant 3a, 3b, reliés respectivement aux deux poutres 12 heures 1a, 1 b, et supportant des grilles de déviation 5a, 5b,
- deux demi-capots 7a, 7b montés chacun coulissant respectivement sur une poutre 12 heures 1a, 1b de manière à pouvoir découvrir les grilles de déviation 5a, 5b en vue de réaliser l'inversion de poussée.

Comme cela est connu en soi, lors de l'inversion de poussée, l'air A1 en provenance de la soufflante (non représentée) et circulant à l'intérieur de la veine de flux secondaire 9, traverse les grilles 5a, 5b et est rejeté vers l'avant de la nacelle, comme indiqué par la flèche A2.

Dans un souci de gain de masse notamment, de nombreux travaux ont porté ces dernières années sur des solutions en matériaux composites pour les poutres longitudinales 12 heures 1 a, 1 b et 6 heures et les demi-cadres avant 3a, 3b.

L'une des difficultés rencontrées avec ce choix de matériaux réside notamment dans la réalisation de charnières de liaison, notamment entre les deux poutres 12 heures 1a, 1b : il faut en effet classiquement prévoir, sur chaque poutre 1 a, 1 b, une charnière située respectivement au droit de chaque demi-cadre avant 3a, 3b, souvent désignée par charnière R1, permettant la mise en place d'une bielle de liaison entre ces deux poutres, de manière à reprendre les différents efforts tendant à séparer ces deux poutres l'une de l'autre.

Ces efforts comprennent notamment des efforts circonférentiels provenant des poutres 1 a, 1 b, des demi-cadres 3a, 3b, ainsi que des moments de torsion et de flexion dus à la position des charnières R1 sur chaque poutre 1 a, 1 b.

Ces charnières R1 sont particulièrement sollicitées en raison de leurs positions à la jonction entre leurs poutres respectives 1 a, 1 b et les demi-cadres avant respectifs 3a, 3b.

Ces positions particulières confèrent à ces charnières R1 un rôle différent de ceux des autres charnières en termes de façon de travailler et de cheminement des efforts : ces charnières ont la particularité de reprendre principalement des efforts provenant des demi-cadres avant 3a, 3b.

Ceci s'explique par le fait que la bielle de liaison entre les deux charnières R1 a pour fonction de « refermer » les deux demi-cadres avant qui entourent le carter moteur ; pour optimiser le passage d'efforts, les charnières R1 sont traditionnellement alignées sur le plan d'inertie du cadre formé par les deux demi-cadres avant 3a, 3b.

La présente invention a notamment pour but de fournir des charnières R1 présentant une résistance accrue vis-à-vis de ces efforts, dans un ensemble de poutres 12 heures et de demi-cadres avant formé avec des matériaux composites.

L'invention vise ainsi notamment à intégrer les charnières R1 à la jonction de chaque poutre 12 heures et de son demi-cadre avant associé, la complexité étant d'optimiser le passage des efforts, tout particulièrement dans un cadre avant à section ouverte formé en matériaux composites.

Des problèmes analogues se rencontrent dans les zones de liaison des poutres 6 heures avec les demi-cadres avant, où l'on doit prévoir des charnières permettant la mise en place de verrous de fermeture des deux demi-cadres avant.

L'invention vise donc également à intégrer ces charnières à la jonction de chaque poutre 6 heures avec son demi-cadre avant associé.

On atteint ces buts de l'invention avec une demi-structure de support pour nacelle de moteur d'aéronef, comprenant au moins une poutre longitudinale et un demi-cadre avant reliés l'un à l'autre et formés au moins en partie en matériaux composites, remarquable en ce qu'elle comprend une charnière de liaison disposée dans la zone de jonction de cette poutre et de ce demi-cadre, cette charnière étant formée par des matériaux composites disposés de manière d'une part à former le volume de ladite charnière, et d'autre part de manière que leurs fibres soient disposées dans la continuité des fibres des matériaux composites formant ledit demi-cadre avant.

Cet agencement particulier permet d'assurer une continuité de fibres des matériaux composites formant la charnière avec celles des matériaux composites formant le demi-cadre avant, ce qui assure une excellente transmission des efforts notamment entre le demi-cadre avant et la charnière.

A noter que les charnières et les demi-cadres avant peuvent être formés par empilement de tissus, ou bien par tissage 2D ou 3D.

Suivant d'autres caractéristiques optionnelles de cette demi-structure de support :
- ladite poutre est une poutre 12 heures ;
- ladite poutre est une poutre 6 heures ;
- la partie aval de ladite charnière est située au droit de la partie aval dudit demi-cadre avant : cette configuration assure une transmission optimale des efforts entre le demi-cadre avant et la charnière ;
- les fibres des matériaux composites formant lesdites charnières convergent les unes vers les autres, le volume défini par cette convergence étant rempli de mousse : cette mousse, qui présente une certaine dureté pour un poids très faible, contribue à la résistance de l'ensemble de la structure ; a noter que l'on peut également envisager de remplacer la mousse par du vide, ou encore par une structure en nid d'abeille, et de manière plus générale par n'importe quel matériau d'âme ;
- les fibres formant la partie amont de ladite charnière sont continues avec les fibres formant un raidisseur dudit cadre avant situé à proximité de ladite zone de jonction : ce lien de la charnière avec le premier raidisseur du demi-cadre avant contribue à la résistance de la liaison entre ces organes ;
- ladite charnière est posée sur ladite poutre, et les fibres formant ces organes respectifs sont intimement liées : cette configuration assure une transmission optimale des efforts entre la poutre et le demi-cadre avant ;
- ladite charnière est du type femelle et comporte une chape aval et une chape amont, percées chacune d'un orifice de fixation d'une bielle de liaison ;
- ladite charnière est du type mâle, et définit un bloc de matériau composite percé d'un orifice de fixation d'une bielle de liaison.

La présente invention se rapporte également à une nacelle pour moteur d'aéronef, remarquable en ce qu'elle comprend deux demi-structures conformes à ce qui précède.

D'autres caractéristiques et avantages de la présente invention apparaîtront à la lumière de la description qui va suivre, et à l'examen des figures ci-annexées dans lesquelles :
- la figure 1 représente une vue en perspective d'une partie arrière de nacelle de la technique antérieure, comportant un système d'inversion de poussée, et décrite dans le préambule de la présente description,
- la figure 2 représente une vue de dessus partielle d'une poutre 12 heures gauche de la partie arrière de nacelle de la figure 1, et de son demi-cadre avant gauche associé,
- la figure 3 représente, en vue de dessus analogue à celle de la figure 2, un ensemble de poutres 12 heures gauche et son demi-cadre avant gauche associé, cet ensemble étant réalisé conformément aux préceptes de la présente invention,
- la figure 4 représente l'ensemble de la figure 3 en perspective,
- la figure 5 représente, à plus grande échelle, la demi-structure des figures 3 et 4, prise en coupe selon un plan parallèle au plan XY, à la hauteur indiquée par la ligne P visible sur la figure 4,
- la figure 6 est une vue analogue à celle de la figure 4, mettant en évidence les différents modules constitutifs de la demi-structure représentée aux figures 3 à 5,
- la figure 7 est une vue en perspective de l'un des modules formant une partie de la charnière de la demi-structure des figures 3 à 7,
- la figure 8 est une vue en perspective d'un autre module formant la partie amont de la charnière de la demi-structure des figures 3 à 6,
- la figure 9 est une vue en perspective analogue à celle de la figure 4 d'un autre mode de réalisation de la demi-structure selon l'invention, et
- la figure 10 est une vue en perspective d'encore un autre mode de réalisation de la demi-structure selon l'invention.

Sur l'ensemble de ces figures, on a représenté un repère XYZ, dont les axes représentent respectivement les directions longitudinale, transversale et verticale de la nacelle, ces directions s'entendant par rapport à l'aéronef auquel cette nacelle doit être fixée.

A noter que la flèche de l'axe X est orientée de l'aval vers l'amont de la nacelle.

Sur la figure 2 est représentée la poutre 12 heures gauche 1 b de la partie d'inverseur représentée à la figure 1, et son demi-cadre avant associé 3b.

Cette demi-structure est d'un type tout à fait classique, c'est-à-dire que la poutre 1 b et le demi-cadre avant 3b sont formés par une association de matériaux métalliques et composites.

Comme indiqué dans le préambule de la présente description, il convient de relier la poutre gauche 1 b à la poutre droite 1 a par une bielle de liaison exerçant un effort orienté selon la flèche 11 de la figure 2, et coopérant avec une charnière 13 solidaire de la poutre gauche 1 b, en étant articulée par rapport à cette charnière autour d'un axe 15 (étant entendu que cette bielle coopère avec une charnière analogue solidaire de l'autre poutre 1a).

Dans ce qui suit, on va s'attacher à la demi-structure gauche formée par la poutre 1 b et son demi-cadre avant associé 3b, mais il va bien entendu de soi que la poutre droite 1a et son demi-cadre avant associé 3a présentent des caractéristiques tout à fait analogues.

Dans le cadre de la présente invention, et comme cela est représenté aux figures 3 à 11, on choisit de former la poutre 1 b et son demi-cadre avant associé 3b en matériaux composites. Ces matériaux composites peuvent comprendre, classiquement, des tissus à fibres de carbone pré-imprégnés de résine polymérisable, que l'on place dans des moules appropriés avec de la résine polymérisable, et dont on élève la température pour en obtenir le durcissement.

De manière alternative, les matériaux composites peuvent être obtenus par des procédés de type LCM (« Liquid Composite Molding »), regroupant notamment les procédés RTM (« Resin Transfer Moulding ») et LRI (« Liquid Resin Infusion »). La préforme sèche peut être obtenue par tissage 2D ou 3D, par tressage, par dépose automatique de fibres (nappes par exemple), ou encore par empilement de tissus.

Dans le premier mode de réalisation représenté sur les figures 3 à 8, la charnière 13 est du type femelle, c'est-à-dire qu'elle comporte une chape aval 13a et une chape amont 13b, les termes « aval » et « amont » devant s'entendre par rapport à la circulation de l'air à l'intérieur de la nacelle, tel qu'indiqué par la flèche A1 de la figure 1.

Les deux chapes 13a et 13b sont munies d'orifices 15 destinés à recevoir un axe matériel permettant la fixation d'une bielle de liaison des deux poutres 12 heures 1 a et 1 b.

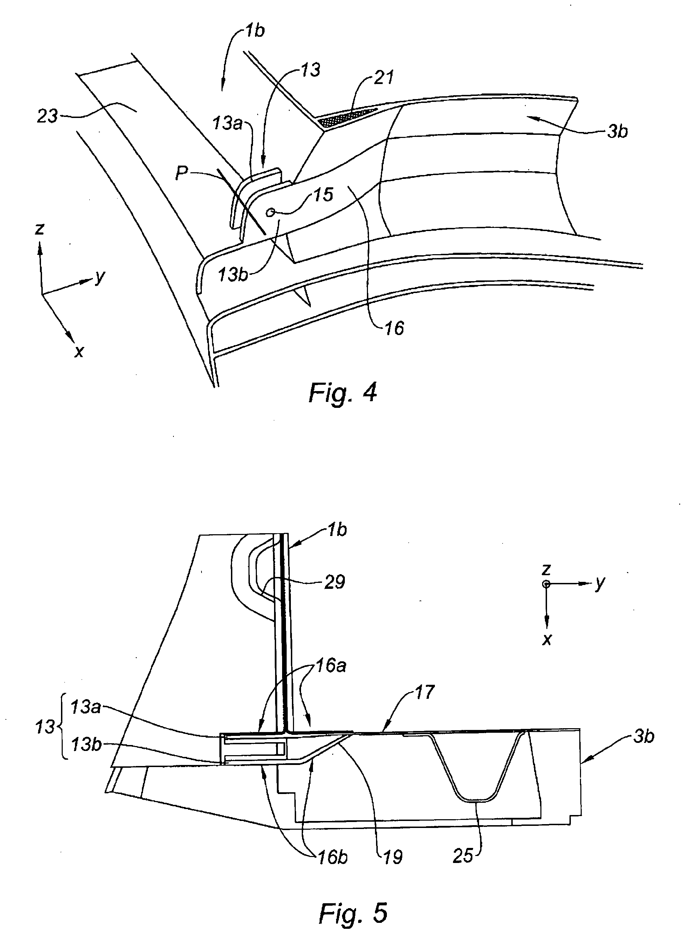

Comme cela est visible à la figure 5, les fibres 16a et 16b des matériaux composites, formant respectivement les chapes 13a et 13b de la charnière 13, sont disposées respectivement dans le plan et en amont des fibres 17 des matériaux composites formant la structure du demi-cadre avant 3b.

Plus précisément, les fibres 16a et 16b se rapprochent les unes des autres dans une zone de convergence 19 pour se situer dans la continuité des fibres 17.

Le volume creux défini par la zone de convergence 19 est de préférence rempli d'une mousse structurante légère, telle qu'une mousse en polyuréthane 21, comme représenté à la figure 4.

De préférence, les fibres 16a et 16b sont par ailleurs intimement liées avec les fibres des matériaux composites formant une plage horizontale 23 de la poutre 1 b (voir figure 4), de sorte que la charnière 13 est à la fois posée sur et solidaire de cette plage 23.

Comme on peut le comprendre à la lumière de ce qui précède, le fait que les fibres 16a, 16b des matériaux composites formant les chapes 13a et 13b de la charnière 13 convergent les unes vers les autres et se confondent avec fibres formant la structure du demi-cadre avant 3b, permet d'obtenir une excellente continuité de fibres entre ces différentes pièces, ce qui confère une grande résistance à la charnière 13, et permet ainsi une excellente transmission d'efforts de la poutre 1 b et du demi-cadre avant 3b à la charnière 13, et à sa bielle (non représentée) associée.

La forme convergente des fibres 16b de la charnière en direction des fibres 17 formant la structure du demi-cadre avant 3b, permet de faire jouer à ces fibres 16b la fonction de raidisseur de la demi-structure de cadre avant, au même titre que les autres raidisseurs 25 (voir figure 5) distribués régulièrement sur ce demi-cadre avant.

On obtient de la sorte une résistance accrue de l'ensemble de la demi-structure, et en particulier de la zone de la charnière 13.

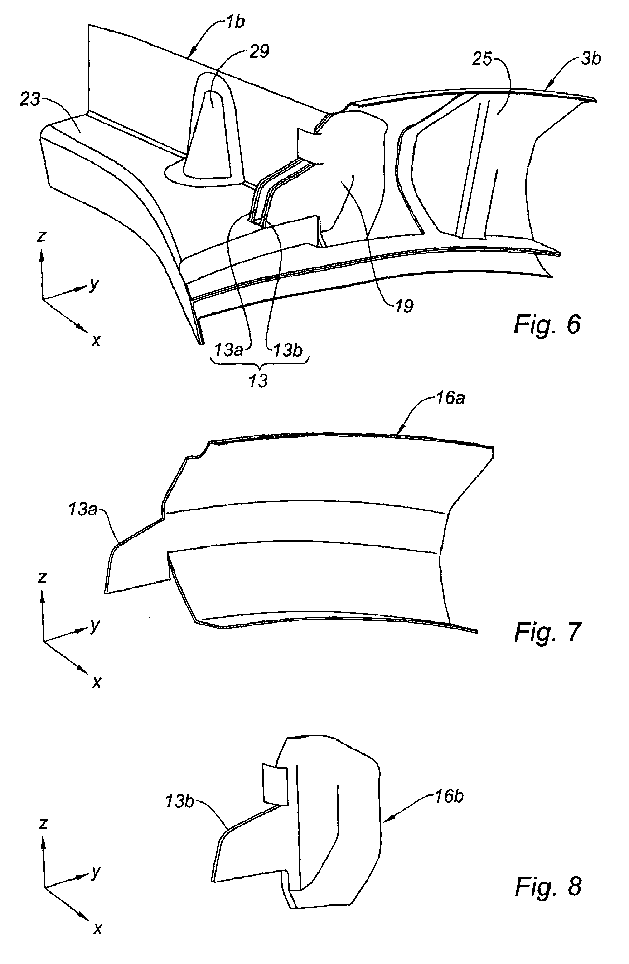

Comme on peut le voir sur l'ensemble des figures 6 à 8, la structure qui vient d'être décrite peut être formée à partir de modules de matériaux composites, chaque module étant indiqué par une trame différente sur l'ensemble de ces figures.

Plus précisément, comme représenté à la figure 7, un seul et même module 16a peut être utilisé pour former la chape aval 13a de la charnière 13 et une partie de la structure du demi-cadre avant 3b, et un autre module 16b peut être utilisé pour former la chape amont 13b de la charnière 13, ainsi que le premier raidisseur du demi-cadre avant 3b.

D'autres modules peuvent ensuite être utilisés pour former les autres raidisseurs 25 du demi-cadre avant 3b, la poutre 1b ainsi que ses raidisseurs 29 (voir figure 6).

Bien entendu, la présente invention n'est nullement limitée aux modes de réalisation décrits et représentés.

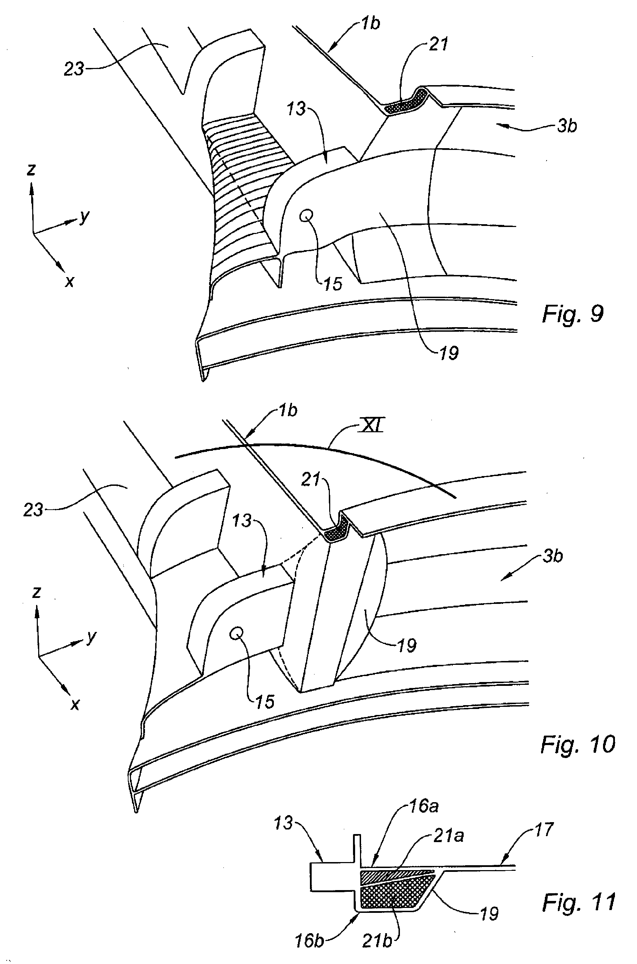

C'est ainsi que l'on peut voir sur la figure 9 un autre mode de réalisation dans lequel la charnière 13 est du type mâle, c'est-à-dire qu'elle est pleine et munie d'un orifice 15 destiné à accueillir un axe matériel, lui-même destiné à coopérer avec un étrier de fixation de la bielle de liaison à l'autre poutre (étrier et bielle non représentés).

Dans le mode de réalisation de la figure 10, où l'on a également une charnière 13 du type mâle, on voit que la zone de liaison des fibres 16a, 16b formant la charnière 13 avec les fibres 17 formant la structure du demi-cadre avant 1 b, peut comporter un double noyau rempli de deux mousses 21 a, 21 b, pouvant présenter des caractéristiques différentes : ceci permet, si nécessaire, d'augmenter les caractéristiques du raidisseur situé dans la zone de jonction de la poutre 1 b avec son demi-cadre avant associé 3b.

C'est ainsi également que l'on pourrait transposer les préceptes décrits au sujet de la liaison entre les poutres 12 heures et les demi-cadres avant à la liaison entre ces demi-cadres avant et les poutres 6 heures.

## Revendications

1. Demi-structure de support pour nacelle de moteur d'aéronef, comprenant au moins une poutre longitudinale (1a, 1 b) et un demi-cadre avant (3a, 3b) reliés l'un à l'autre et formés au moins en partie en matériaux composites, et comprenant une charnière (13) de liaison disposée dans la zone de jonction de cette poutre (1a, 1b) et de ce demi-cadre (3a, 3b),
**caractérisée en ce que** cette charnière (13) étant formée par des matériaux composites agencés de manière que leurs fibres (16a, 16b) soient disposées dans la continuité des fibres (17) des matériaux composites formant ledit demi-cadre avant (3a, 3b).

2. Demi-structure selon la revendication 1, **caractérisée en ce que** ladite poutre (1 a, 1 b) est une poutre 12 heures.

3. Demi-structure selon la revendication 1, **caractérisée en ce que** ladite poutre (27) est une poutre 6 heures.

4. Demi-structure selon la revendication 2, **caractérisée en ce que** la partie aval (13a) de ladite charnière (13) est située au droit de la partie aval dudit demi-cadre avant (3a, 3b).

5. Demi-structure selon l'une quelconque des revendications précédentes, **caractérisée en ce que** les fibres (16a, 16b) des matériaux composites formant lesdites charnières convergent les unes vers les autres, le volume défini par cette convergence (19) étant rempli de mousse (21 ; 21 a, 21 b).

6. Demi-structure selon l'une quelconque des revendications précédentes, **caractérisée en ce que** les fibres (16b) formant la partie amont de ladite charnière (13) sont continues avec les fibres formant un raidisseur dudit demi-cadre avant (3a, 3b) situé à proximité de ladite zone de jonction.

7. Demi-structure selon l'une quelconque des revendications précédentes, **caractérisée en ce que** ladite charnière (13) est posée sur ladite poutre (1 a, 1 b), et les fibres des matériaux composites formant ces organes respectifs sont intimement liées.

8. Demi-structure selon l'une quelconque des revendications précédentes, **caractérisée en ce que** ladite charnière (13) est du type femelle et comporte une chape aval (13a) et une chape amont (13b), percées chacune d'un orifice (15) de fixation d'une bielle de liaison.

9. Demi-structure selon l'une quelconque des revendications précédentes, **caractérisée en ce que** ladite charnière (13) est du type mâle, et définit un bloc de matériau composite percé d'un orifice de fixation (15) d'une bielle de liaison.

10. Nacelle pour moteur d'aéronef, **caractérisée en ce qu'**elle comprend deux demi-structures (1 a, 3a ; 1 b, 3b) selon l'une quelconque des revendications précédentes.

## Patentansprüche

1. Tragstrukturhälfte für Flugfahrzeug-Motorgondel, umfassend mindestens einen Längsträger (1 a, 1 b) und eine vordere Rahmenhälfte (3a, 3b), die miteinander verbunden sind und mindestens teilweise aus Verbundmaterialien gebildet sind, und umfassend ein Verbindungsscharnier (13), das in der Verbindungszone dieses Trägers (1a, 1b) und dieser Rahmenhälfte (3a, 3b) angeordnet ist,
**dadurch gekennzeichnet, dass** dieses Scharnier (13) aus Verbundmaterialien gebildet ist, die derart eingerichtet sind, dass ihre Fasern (16a, 16b) in der Verlängerung der Fasern (17) der Verbundmaterialien angeordnet sind, welche die vordere Rahmenhälfte (3a, 3b) bilden.

2. Strukturhälfte nach Anspruch 1, **dadurch gekennzeichnet, dass** der Träger (1a, 1 b) ein 12-Uhr-Träger ist.

3. Strukturhälfte nach Anspruch 1, **dadurch gekennzeichnet, dass** der Träger (27) ein 6-Uhr-Träger ist.

4. Strukturhälfte nach Anspruch 2, **dadurch gekennzeichnet, dass** sich der stromabwärtige Teil (13a) des Scharniers (13) rechtwinklig zu dem stromabwärtigen Teil der vorderen Rahmenhälfte (3a, 3b) befindet.

5. Strukturhälfte nach einem der vorhergehenden Ansprüche, **dadurch gekennzeichnet, dass** die Fasern (16a, 16b) der Verbundmaterialien, welche die Scharniere bilden, zusammenlaufen, wobei das durch dieses Zusammenlaufen (19) definierte Volumen mit Schaumstoff (21; 21 a, 21 b) gefüllt ist.

6. Strukturhälfte nach einem der vorhergehenden Ansprüche, **dadurch gekennzeichnet, dass** die Fasern (16b), die den stromaufwärtigen Teil des Scharniers (13) bilden, die Fasern verlängern, die eine Versteifung der vorderen Rahmenhälfte (3a, 3b) bilden, die sich in der Nähe der Verbindungszone befindet.

7. Strukturhälfte nach einem der vorhergehenden Ansprüche, **dadurch gekennzeichnet, dass** das Scharnier (13) auf den Träger (1 a, 1b) gesetzt ist und die Fasern der Verbundmaterialien, die diese jeweiligen Elemente bilden, eng verknüpft sind.

8. Strukturhälfte nach einem der vorhergehenden Ansprüche, **dadurch gekennzeichnet, dass** das Scharnier (13) vom inneren Typ ist und einen stromabwärtigen Gabelbügel (13a) und einen stromaufwärtigen Gabelbügel (13b) umfasst, durch die jeweils eine Öffnung (15) zur Befestigung einer Verbindungsstange geht.

9. Strukturhälfte nach einem der vorhergehenden Ansprüche, **dadurch gekennzeichnet, dass** das Scharnier (13) vom äußeren Typ ist und einen Verbundmaterialblock definiert, durch den eine Öffnung (15) zur Befestigung einer Verbindungsstange geht.

10. Gondel für Flugfahrzeugmotor, **dadurch gekennzeichnet, dass** sie zwei Strukturhälften (1a, 3a; 1b, 3b) nach einem der vorhergehenden Ansprüche umfasst.

## Claims

1. A support half-structure for an aircraft engine nacelle, comprising at least one longitudinal beam (1a, 1b) and a front half-frame (3a, 3b) connected to one another and formed at least partly of composite materials, and comprising a connecting hinge (13) disposed in the junction area of this beam (1 a, 1b) and of this half-frame (3a, 3b) **characterized in that**;
this hinge (13) is formed by composite materials arranged in such a way that their fibers (16a, 16b) are disposed in the continuity of the fibers (17) of the composite materials forming said front half-frame (3a, 3b).

2. The half-structure according to claim 1, **characterized in that** said beam (1 a, 1b) is a 12-hour beam.

3. The half-structure according to claim 1, **characterized in that** said beam (27) is a 6-hour beam.

4. The half-structure according to claim 2, **characterized in that** the downstream part (13a) of said hinge (13) is located on the right of the downstream part of said front half-frame (3a, 3b).

5. The half-structure according to any one of the preceding claims, **characterized in that** the fibers (16a, 16b) of the composite materials forming said hinges converge towards each other, the volume defined by this convergence (19) being filled with foam (21; 21 a, 21 b).

6. The half-structure according to any one of the preceding claims, **characterized in that** the fibers (16b) forming the upstream part of said hinge (13) are continuous with the fibers forming a stiffener of said front half-frame (3a, 3b) located near said junction area.

7. The half-structure according to any one of the preceding claims, **characterized in that** said hinge (13) is placed on said beam (1a , 1b), and the fibers of the composite materials forming these respective members are closely connected.

8. The half-structure according to any one of the preceding claims, **characterized in that** said hinge (13) is of the female type and includes a downstream clevis (13a) and an upstream clevis (13b), each pierced by a fastening orifice (15) of a link rod.

9. The half-structure according to any one of the preceding claims, **characterized in that** said hinge (13) is of the male type, and defines a block of composite material pierced by a fastening orifice (15) of a link rod.

10. An aircraft engine nacelle, **characterized in that** it comprises two half-structures (1a, 3a; 1 b, 3b) according to any one of the preceding claims.
